(19) Europäisches Patentamt
European Patent Office
Office européen des brevets

(11) **EP 3 252 094 A1**

(12) **EUROPEAN PATENT APPLICATION**

(43) Date of publication:
**06.12.2017 Bulletin 2017/49**

(51) Int Cl.:
**C08K 5/00** (2006.01)      **C08K 5/098** (2006.01)

(21) Application number: **16172204.6**

(22) Date of filing: **31.05.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Borealis AG**
**1220 Vienna (AT)**

(72) Inventors:
• **Bergqvist, Mattias**
  **41674 Göteborg (SE)**

• **Hjertberg, Thomas**
  **43256 Kungshamn (SE)**
• **Hagstrand, Per-Ola**
  **44446 Stenungsund (SE)**
• **Wannerskog, Åsa**
  **416 48 Göteborg (SE)**

(74) Representative: **Salminen, Hannu**
  **Borealis Polymers Oy**
  **P.O. Box 330**
  **06101 Porvoo (FI)**

(54) **FOAMABLE ETHYLENE POLYMER**

(57)    The invention relates to a foamable ethylene polymer composition that is suitable for a foamed cable insulation such as data cable. It further relates to a process for compounding such as a foamable polyethylene composition. The foamable ethylene polymer composition has a high density and with a low dissipation factor. It can be supplied directly to the cable extruders in the form of pellets that are ready to be used in foamable insulation layers.

EP 3 252 094 A1

**Description**

**Field of the Invention**

The invention relates to a foamable ethylene polymer composition that is suitable for a foamed cable insulation such as data cable. It further relates to a process for compounding such as a foamable polyethylene composition.

**Background of the invention**

Communication cables, such as data cables, have an insulation layer that conventionally is made of highly foamed polyethylene. The insulation is foamed to a high degree in order to lower the dielectric constant of the insulation as much as possible. It is important that the cell structure in the foamed insulation is homogeneous with small bubble sizes to avoid having local variations that affect the transmission. This is obtained by having good melt strength, which is a measure of the resistance towards elongation of a polymer melt. When bubbles are formed and grow in the melt, the polymers surrounding the bubbles are stretched out. If melt strength is too poor then the bubbles break from the forces of bubble growth resulting in a collapsed cell structure. Low density polyethylene (LDPE) show a behaviour in which the force required extending the melt one unit length increases after a certain degree of extension, i.e. referred to as melt strength.

A low dissipation factor is crucial in order to reduce signal losses for high frequency signal transmission. It is conventionally obtained by having low polarity and avoiding impurities. Unfortunately LDPE has a high dissipation factor at high frequencies such as 1.9 GHz. Previously, when lower frequencies were used, this was not a problem as LDPE has low dissipation factor at lower frequencies. High density polyethylene (HDPE) has a low dissipation factor, but HDPE has poor melt strength which results in a poor cell structure. A good cell structure, which allows for a low dissipation factor, is achieved when cells are small and are evenly distributed throughout the insulation layer.

Cellular polyethylene insulation materials for data cables normally consist of a mixture of HDPE and LDPE in order to balance a low dissipation factor with good melt strength. The LDPE content is normally between 15-30% depending on construction. LDPE has a significantly higher dissipation factor compared to HDPE, so as low content as possible without risking cell structure quality is preferred.

US20100319957 discloses a resin composition and high-frequency co-axial cable using same composition made from mixture of crosslinked polyethylene and non-crosslinked polyethylene. It is an object of the invention to make a cheap, flexible process for making a foamable high density ethylene polymer and avoid costly step such as irradiation, which is costly and hard to control.

US4614764 discloses a linear low density ethylene polymers blended with modified linear low density ethylene polymers. LLDPE is treated with peroxide and used as a masterbatch for improving bubble stability of blown film.

The object of the invention is to make a foamable ethylene polymer composition with a high density and a low dissipation factor in the form of pellets that can be supplied directly to the cable extruders and that the pellets are ready to be used in foamable insulation layers.

It is well know that LDPE has good melt strength but high dissipation factor. It is further know that HDPE has low dissipation factor but more or less no melt strength.

It has been found by adding small amount of peroxide in reactive compounding of HDPE good melt strength can be achieved with a surprisingly low dissipation factor, despite the presence of polar decomposition products from the peroxides.

One object of the invention is that peroxide decomposition products are degassed. This is shown by the low dissipation factor of degassed samples.

Another object of the invention is foamable high melt strength ethylene polymer composition with a good processability, i.e. allowing high speed extrusion of for example an insulation layer in cables, especially for thin insulation layer in cables, such as data cables.

Yet another object is to provide a technology that is applicable to different starting MFR, thus a flexible and stable process. This provides a freedom in by optimising the system via the starting MFR and peroxide content.

One object is to make a homogenously foamable ethylene polymer composition. This is achieved by using only one fraction of a peroxide treated ethylene polymer composition, avoid adding LDPE fraction. This reduces the risk of inhomogeneity in for example blends comprising HDPE/LDPE. Poor blending will increase dissipation factor. It is an object of the invention to avoid polymer blends. It further simplifies the process by avoiding a mixing step.

One object of the invention is an effective process for making a foamable ethylene according to the invention wherein all parts of the ethylene composition is added prior to peroxide treatment and additives keep their desired properties after peroxide treatment.

**Brief summary of the invention**

The invention is a foamable ethylene polymer composition comprising

    a. at least one antioxidant,
    b. and at least one process aid, having a melt strength of at least 2 cN and a density of 940 to 970 kg/m$^3$.

It is an essential part of the invention that the ethylene polymer is foamable. It means that the ethylene polymer composition can be made into a foam. A foam is defined by having a cellular structure created by chemical blowing agents during extrusion or physical blowing by a gas during extrusion. In order to foam the ethylene polymer composition a high melt strength is required, such as a melt strength of at least 2 cN. This enables a good cell structure in the foam.

The invention also relates to a foamed cable insulation comprising the foamable ethylene polymer composition according to any embodiment. It further relates to the use of the foamable ethylene polymer composition in a foamed cable insulation, such as a foamed cable insulation layer.

The invention further relates to a data cable comprising the foamed cable insulation.

Another aspect of the invention is a process for making a foamable polymer composition comprising:

    a. an unreacted ethylene polymer composition comprising

        i. an ethylene polymer with a density of 940 to 970 kg/m$^3$ and an MFR$_2$ of 3 to 50 gr/10min,
        ii. a peroxide,
        iii. at least one antioxidant, and
        iv. at least one process aid,

    b. peroxide treat the unreacted ethylene polymer composition in a compounding extruder
    c. pelletize the foamable ethylene polymer composition
    wherein the MFR$_2$ is decreased with at least 3 gr/10min of the foamable ethylene polymer composition compared with the unreacted ethylene polymer.

The invention also relates to the use of foamable ethylene polymer composition obtainable, suitably obtained, from a process as described above in a foamed cable insulation, suitable a data cable insulation.

**The invention in detail**

The foamable ethylene polymer composition is suitable for a foamed cable insulation. The foamable ethylene polymer composition is suitable a high melt strength foamable ethylene polymer composition. The foamable ethylene polymer composition comprises at least one antioxidant, and at least one process aid. One object of the invention is to make a foamable ethylene polymer composition that can be used directly by a cable manufacturer and that comprises all necessary parts to make a foamed cable insulation comprising the foamable ethylene polymer composition.

The foamable ethylene polymer composition has a melt strength of at least 2 cN, suitably 2 to 15 cN, more suitably 3 to 15 cN and most suitably 4 to 15 cN. The foamable ethylene polymer composition should have a density of 940 to 970 kg/m$^3$, suitably 950 to 970 kg/m$^3$, and most suitably 960 to 970 kg/m$^3$. The foamable ethylene polymer composition can have an MFR$_2$ measured, suitably 0.1 to 50 gr/10min, and most suitably 0.5 to 10 gr/10min.

The foamable ethylene polymer composition suitably has MFR$_5$ measured at 140°C of 0.5 to 50 gr/10min, suitably 0.5 to 20 gr/10min, more suitably 1 to 10 gr/10min and most suitably 1 to 5 gr/10min.

In one embodiment has the foamable ethylene polymer composition a dissipation factor measured at 1.9GHz after drying of 50 to 80 (*10$^{-6}$), suitably 50 to 75 (*10$^{-6}$). One object of the invention is that the foamable ethylene polymer composition has low dissipation factor and good foamability. Another aspect of the invention is that the foamable ethylene polymer composition should be ready to be used directly by a cable manufacturer.

In one embodiment of the invention the foamable ethylene polymer composition has a crystallinity of 75 to 90 wt%. It has been found that a high crystallinity decreases the dissipation factor. The foamable ethylene polymer composition should have a crystallisation temperature of 110 to 130°C.

The process aid is suitably a stearate. It has been found that stearates are suitable process aids for foamable ethylene polymer composition, especially suitable is zinc stearate, due to little or no impact on the dissipation factor.

The antioxidant is suitably a phenolic antioxidant. It has been found that phenolic antioxidants are suitable for foamable ethylene polymer composition, especially suitable is sterically hindered phenolic antioxidant, such as pentaerythritol tetrakis(3-(3,5-di-tert-butyl-4-hydroxyphenyl)propionate), due to little or no impact on the dissipation factor.

The foamable ethylene polymer composition further comprises a processing stabiliser, suitably a phosphite stabiliser, more suitably a hydrolytically stable phosphite processing stabiliser, such as tris(2,4-ditert-butylphenyl)phosphite, due to little or no impact on the dissipation factor.

The foamable ethylene polymer composition comprises a polymer base resin part, an additive part and suitably a masterbatch part. In one embodiment of the invention the foamable ethylene polymer composition comprises of at least 80 wt% of a peroxide treated ethylene polymer composition, suitably of at least 85 wt% and most suitably of at least 90 wt%. Most suitably the polymer base resin part in the foamable ethylene polymer composition consists of the peroxide treated ethylene polymer composition, with the exclusion of masterbatches. A masterbatch is defined to have a high content of additives of at least 30 wt%, suitably at least 50 wt%, which are non-polymeric. Masterbatches can be added either directly into the foamable ethylene polymer composition, suitable added when the foamable ethylene polymer composition is prepared. Masterbatches can also be added in later stages to the foamable ethylene polymer composition, typically during extrusion of the cable insulation layers comprising the foamable ethylene polymer composition. Typical masterbatches are colour masterbatches and foaming masterbatches such as blowing agent masterbatches, most suitable is a blowing masterbatch added. A typical amount of masterbatch in the foamable ethylene polymer composition is 0.1 to 10 wt%, suitably 0.3 wt% to 7 wt%. In a preferred embodiment the foamable ethylene polymer composition is totally free from LDPE, suitably including masterbatches.

The total amount of additives is typically from 0.1 wt% to 10 wt%, suitably 0.5 wt% to 5 wt%.

The $MFR_5$ measured at 140°C of the foamable ethylene polymer masterbatch is typically 0.5 to 20 gr/10min, suitable 0.5 to 5 gr/10min. In the embodiment of the foamable ethylene polymer composition comprising a blowing masterbatch with a blowing agent that reacts at a low temperature, i.e. below 180°C, the MFR can be measured as $MFR_5$ measured at 140°C. In order to calculate the $MFR_5$ measured at 140°C from the $MFR_2$ measured at 140°C can a factor in the range of 0.2 to 0.33 be used to give a good indication.

The peroxide treated ethylene polymer composition comprises suitably an unreacted ethylene polymer with a density a 940 to 970 kg/m$^3$, more suitably 950 to 970 kg/m$^3$, and most suitably 960 to 970 kg/m$^3$. The $MFR_2$ is suitably 3 to 50 gr/10min, more suitably 5 to 50 gr/10min, and most suitably 5 to 15 gr/10min. The ethylene polymer is suitably a Ziegler-Natta catalysed ethylene polymer.

In one embodiment of the invention the peroxide has a half-life temperature (T½) at 0.1 h above 133°C, such peroxides have been found to give homogenous foamable ethylene compositions. In a more suitable embodiment is the peroxide a 2,5-bis(tert-butylperoxy)-2,5-dimethylhexane, CAS 78-63-7.

The invention also relates to a foamed cable insulation comprising the foamable ethylene polymer composition according to any previous embodiment. It further relates to the use of a foamable ethylene polymer composition in a foamed cable insulation. A typical density of the foamed insulation is below 500 kg/m$^3$, suitably below 400 kg/m$^3$. The density should be as low as possible, but conventional low density is above 300 kg/m$^3$.

The invention relates to a data cable comprising the foamed cable insulation.

The invention is a process for making a foamable ethylene polymer composition comprising:

> a. an unreacted ethylene polymer composition comprising
>
> > i. an ethylene polymer with a density a 940 to 970 kg/m$^3$ and an $MFR_2$ of 3 to 50 gr/10min
> > ii. a peroxide
> > iii. at least one antioxidant, and
> > iv. at least one process aid,
>
> b. peroxide treat the unreacted ethylene polymer composition in an extruder
> c. pelletize the foamable ethylene polymer composition
> wherein the $MFR_2$ is decreased with at least 3 gr/10min of the foamable ethylene polymer composition compared with the unreacted ethylene polymer.

The process is suitably free from any source of irradiation.

The unreacted ethylene polymer composition has a density of 940 to 970 kg/m$^3$, suitably 950 to 970 kg/m$^3$, and more suitably 960 to 970 kg/m$^3$. The $MFR_2$ of the unreacted ethylene polymer composition is suitably 3 to 50 gr/10min, more suitably 5 to 50 gr/10min, and most suitably 5 to 15 gr/10min. The ethylene polymer is suitably a Ziegler-Natta catalysed ethylene polymer.

In one embodiment of the invention the unreacted ethylene polymer composition has a crystallinity of 70 to 90 wt%, suitably 75 to 90 wt%. The crystallinity of the foamable polymer should suitably not be decreased with more than 5 wt% compared with the unreacted ethylene polymer, suitably less than 3 wt%. The unreacted ethylene polymer composition should suitably have a crystallisation temperature of 110 to 130°C. The change in crystallisation temperature should be less than 5°C, suitably less than 3°C.

The peroxide has suitably a half-life temperature (T½) at 0.1 h above 133 °C. The amount of charged peroxide in the peroxide treatment step is suitably 0.05 to 2 wt% of the foamable polymer composition, more suitably 0.1 to 1 wt%, and most suitably 0.1 to 0.5 wt%.

In one embodiment of the invention is the $MFR_2$ decreased with at least 3 gr/10min of the foamable ethylene polymer composition compared with the unreacted ethylene polymer. In another embodiment is the $MFR_2$ decreased with at least 50%. The object of the invention is that the final $MFR_2$ should be $MFR_2$ of 1 to 50 gr/10min.

In another embodiment of the invention is the process for making a foamable polymer composition including a degas step after the peroxide treatment. This step is heating the foamable ethylene polymer composition to at least 24 hours at 50°C, suitably 24 hours at 60°C and most suitably 24 hours at 70°C. In another embodiment the degass step is done directly on the cable

The invention also relates to the use of foamable ethylene polymer composition obtainable from a process as described above in a foamed cable insulation, for example in a data cable, suitable a foamed data cable insulation.

## Test methods

MFR$_2$ (190°C) is measured according to ISO 1133 (190 °C, 2.16 kg load).
Density is measured according to ISO 1183.

## Melting temperature Tm

The melting temperature Tm, was measured with a TA Instruments Q2000 differential scanning calorimetry device (DSC) according to ISO 11357/3 on 5 to 10 mg samples. Melting temperatures were obtained in a heat/cool/heat cycle with a scan rate of 10°C/min between 30°C and 180°C. Melting and crystallisation temperatures were taken as the peaks of the endotherms and exotherms in the cooling cycle and the second heating cycle respectively.

## Dielectric Properties (Dielectric loss tangent (tan $\delta$)):

The compositions have been compression moulded at 200 °C in a frame to yield plates of 4 mm thickness, 80 mm width and 80 mm length. The pressure has been adjusted high enough to obtain a smooth surface of the plates. A visual inspection of the plates showed no inclusions such as trapped air or any other visible contamination.

Characterization of the plaques for dielectric properties:]

For the measurement of the dielectric constant and the dielectric loss tangent (tan $\delta$) of the materials, a split-post dielectric resonator has been used. The technique measures the complex permittivity of dielectric laminar specimen (plaques) in the frequency range from 1 - 10 GHz.

The test is conducted at 23 °C.

The split-post dielectric resonator (SPDR) was developed by Krupka and his collaborators [see: J Krupka, R G Geyer, J Baker-Jarvis and J Ceremuga, 'Measurements of the complex permittivity of microwave circuit board substrates using a split dielectric resonator and reentrant cavity techniques', Proceedings of the Conference on Dielectric Materials, Measurements and Applications - DMMA'96, Bath, UK, published by the IEE, London, 1996.].

Two identical dielectric resonators are placed coaxially along the z-axis so that there is a small laminar gap between them into which the specimen can be placed to be measured. By choosing suitable dielectric materials the resonant frequency and Q-factor of the SPDR can be made to be temperature stable. Once a resonator is fully characterized, only three parameters need to be measured to determine the complex permittivity of the specimen: its thickness and the changes in resonant frequency, $\Delta f$, and in the Q-factor, $\Delta Q$, obtained when it is placed in the resonator.

Specimens of 4 mm thickness have been prepared by compression moulding as described above and measured at a high frequency of 1.9 GHz.

A comprehensive review of the method is found in J Krupka, R N Clarke, O C Rochard and A P Gregory, 'Split-Post Dielectric Resonator technique for precise measurements of laminar dielectric specimens - measurement uncertainties', Proceedings of the XIII Int. Conference MIKON'2000, Wroclaw, Poland, pp 305 - 308, 2000.

Attenuation:

For pair cables the dependence of the attenuation "a on the dielectric loss factor tan $\delta$ is outlined:

The attenuation "a" calculates from constants A and B, from the distance between the wires in a pair 2s, from the conductor diameter d, from the frequency f, the dielectric constant ε and the dielectric loss factor δ according to: a = A 1 d log 2 s d f ε + Bf tan δ ε

$$a = A \left( \frac{1}{d \, log\left(\frac{2s}{d}\right)} \right) \sqrt{f} \sqrt{\varepsilon} + Bf \, tan\delta \sqrt{\varepsilon}$$

A foamed insulation layer has a lower dielectric constant. The density of foam is dependent on the density of the pure, unfoamed, solid material and the achieved degree of expansion. The dielectric constant can be derived from the density of the foam (the more expansion, the lower the foam density, thus the lower the dielectric constant).

The lower the density p of the foam, the less the dielectric constant according to ε Foam = a · p Foam + b

$$\varepsilon_{Foam} = a \cdot \rho_{Foam} + b$$

Further information on the concept of attenuation can be found in Standard IEC 61156-7 which specifies a calculation method for the attenuation Permittivity: Permittivity is measured by the same method as described for dielectric loss tangent

### Melt strength

The strain hardening behaviour is determined by the method as described in the article "Rheotens-Mastercurves and Drawability of Polymer Melts", M. H. Wagner, Polymer Engineering and Sience, Vol. 36, pages 925 to 935. The content of the document is included by reference. The strain hardening behaviour of polymers is analysed by Rheotens apparatus (product of Göttfert, Siemensstr.2, 74711 Buchen, Germany) in which a melt strand is elongated by drawing down with a defined acceleration. The haul-off force F in dependence of draw-down velocity v is recorded. The test procedure is performed in a standard climatised room with controlled room temperature of 23 °C and 30 bar. The Rheotens apparatus (1) is combined with an extruder/melt pump (3) for continuous feeding of the melt strand (2). The extrusion temperature is 200 °C; a capillary die with a diameter of 2 mm and a length of 6 mm is used. The strength length between the capillary die and the Rheotens wheels is 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand (2) drawn down is 120 mm/sec2. The Rheotens was operated in combination with the PC program EXTENS. This is a real-time data-acquisition program, which displays and stores the measured data of tensile force and drawdown speed. The schematic diagram in figure 1 shows in an exemplary fashion the measured increase in haul-off force F (i.e. "melt strength") versus the increase in draw-down velocity v (i.e. "drawability").

### Shear rheology

Dynamic rheological measurements were carried out with an Anton Paar MCR501 rheometer on compression molded samples under nitrogen atmosphere at 230°C using 25 mm diameter plate and plate geometry. The oscillatory shear experiments were done within the linear viscoelastic range of strain at frequencies from 0.01 to 500 rad/s in line with ISO 6721-1. The values of storage modulus (G'), loss modulus (G''), complex modulus (G*) and complex viscosity (h*) were obtained as a function of frequency (w).

### Materials

HE1123 is a unimodal Ziegler-Natta catalysed HDPE grades with $MFR_2$ of 8 g/10 min and density 963 kg/m$^3$. It contains one antioxidant, one process stabiliser and one process aid. The grade is commercially available from Borealis AG.

HE 3465 is a unimodal Ziegler-Natta catalysed HDPE grades with $MFR_2$ of 12 g/10 min and density 965 kg/m$^3$. It contains one antioxidant, one process stabiliser and one process aid. The grade is commercially available from Borealis AG.

LE1120 is an autoclave LDPE with $MFR_2$ 4.5 g/10 min and density 923 kg/m$^3$. The grade is commercially available from Borealis AG.

**Examples**

Foamable high melt strength ethylene polymer composition samples of different MFR have been produced on grafting line by adding the peroxide, 2,5-Bis(tert-butylperoxy)-2,5-dimethylhexane, during extrusion.

Extruder settings

RPM : 200
Melt temperature 206°C
Extruder pressure: 13-21 bar
Productivity 10 kg/h

The $MFR_2$ can be changed by varying the amount of peroxide to achieve the desired $MFR_2$. The peroxide treatment method is reliable and stable process for changing the $MFR_2$. Table 1 disclose how $MFR_2$ can be controlled by adding different amounts of peroxide.

**Table 1** MFR change after addition of peroxide.

| Material | Peroxide addition (wt%) | $MFR_2$ after peroxide addition (g/10 min) |
|---|---|---|
| HE1123 ref | - | - |
| HE1123 | 0.14 | 4.5 |
| HE1123 | 0.40 | 2.09 |
| HE1123 | 0.69 | 1.0 |
| HE3465 ref | - | - |
| HE3465 | 0.32 | 4.6 |
| HE3465 | 0.63 | 2.1 |
| HE3465 | 1.3 | 0.97 |

**Differential scanning calorimetry**

The results from DSC analysis of peroxide materials and reference materials are presented in Table 2. There is a slight decrease in crystallinity for the peroxide treated materials compared to the reference materials. This is advantageous since a high crystallinity is desired by the invention. The effect on melting and crystallisation temperatures is small meaning that the material is keeping the original properties which is advantageous. A lowering of the crystallinity will negatively affect the dielectrical loss factor and the following lowering of the crystallisation temperature will affect the foaming process.

**Table 2** Melting temperature, crystallisation temperature and crystallinity obtained from DSC analysis.

| Material | Melting temperature (°C) | Crystallisation temp. (°C) | Crystallinity (%) |
|---|---|---|---|
| HE1123 ref | 132.6 | 120.6 | 78.8 |
| HE1123 $MFR_2$ 4.5 g/10 min | 132.2 | 120.4 | 76.8 |
| HE1123 $MFR_2$ 2.1 g/10 min | 132.4 | 120.9 | 78.3 |
| HE1123 $MFR_2$ 1.0 g/10 min | 132.3 | 121.0 | 76.2 |
| HE3465 ref | 131.7 | 119.9 | 78.4 |
| HE3465 $MFR_2$ 4.6 g/10 min | 131.3 | 120.1 | 75.6 |

(continued)

| Material | Melting temperature (°C) | Crystallisation temp. (°C) | Crystallinity (%) |
|---|---|---|---|
| HE3465 MFR$_2$ 2.1 g/10 min | 132.0 | 120.3 | 77.0 |
| HE3465 MFR$_2$ 1.0 g/10 min | 132.1 | 120.7 | 76.2 |

**Shear rheology**

For both materials the peroxide treatment has a large impact on the shear viscosity and it increases dramatically with increased peroxide dosing. The Newtonian plateau where viscosity is constant and not affected by increased shear rates decreases with peroxide addition, and for the materials treated with peroxide down to an MFR$_2$ of 1 g/10 min the curve gets a LDPE like form with no plateau at all. This means that the materials become very shear thinning, and at high shear rates it can be seen that the difference in viscosity between reference material and the high melt strength ethylene polymer composition becomes very small. This is positive as it indicates that the peroxide treatment has a low impact on process viscosity, meaning processability is not highly affected. The peroxide treated materials behaves more like LDPE when subjected to high shear rates, indicating long chain branched structures.

**Table 3** Rheological properties for HE1123 based materials

| Rheological property | HE1123 ref | HE1123 MFR$_2$ 4.5 g/10 min | HE1123 MFR$_2$ 2.1 g/10 min | HE1123 MFR$_2$ 1.0 g/10 min |
|---|---|---|---|---|
| ETA (0.05 rad/s) Pa*s | 1215.5 | 3565 | 9001 | 20015 |
| ETA (300 rad/s) Pa*s | 356 | 407.4 | 447.8 | 497.9 |

**Table 4** Rheological properties for HE3465 based

| Rheological property | HE3465 ref | HE3465 MFR$_2$ 4.6 g/10 min | HE3465 MFR$_2$ 2.1 g/10 min | HE3465 MFR$_2$ 1.0 g/10 min |
|---|---|---|---|---|
| ETA (0.05 rad/s) Pa*s | 808.5 | 4378.5 | 10285 | 20375 |
| ETA (300 rad/s) Pa*s | 279.5 | 370 | 417 | 466.5 |

**Dissipation factor**

Dissipation factor at 1.9 GHz has been measured after drying the material for 72 hours at 90°C. HE1106, which is a is a commercially available grade from Borealis AG has been included and is a mixture of 70% of the HDPE base resin used in HE1123 and 30% of the LDPE in LE1120. The dissipation factor increases with peroxide addition, but rather slow.
All the HE1123 based materials have lower dissipation factors than HE1106 after drying.
The table 5 contains examples showing that the invention results in a better balance of good melt strength and low dissipation factor than the two comparative examples HE1123 ref and commercial ref.
HE1123 ref is a HDPE material which has a very low dissipation factor, but too poor melt strength for foaming. Commercial ref is a commercial solution for high frequency communication cables where 70% of HE1123 ref is blended with 30% autoclave LDPE in order to improve melt strength. Commercial ref has good melt strength, but dissipation factor is much higher than for HE1123 ref and a low dissipation factor is extremely important for high frequency communication insulation. HE1123 MFR$_2$ 4.5 g/10 min and HE1123 MFR$_2$ 1.0 g/10 min are inventive examples of HDPE extruded with peroxide addition in order to yield long chain branched polymer structures. All the inventive examples have higher melt strength than HE1123 ref, and dissipation factors of the inventive examples are lower than for commercial ref. This proves that the invention can provide a better balance of melt strength and low dissipation factor than the comparative examples.

**Table 5,** Material properties

| Material | Peroxide addition (ml/kg) | $MFR_2$ measured at 190°C (gr/10min) | Melt strength (cN) | Dissipation factor 1.9 GHz after drying ($*10^{-6}$) |
|---|---|---|---|---|
| HE1123 ref | - | 8 | 0.6 | 54.3 |
| 70% HE1123 + 30% LE1120 Commercial ref | - | 7.0 | 3.4 | 88.2 |
| HE1123 | 0.18 | 4.5 | 2.7 | 65 |
| HE1123 | 0.9 | 1 | 7.7 | 76.9 |

**Claims**

1. A foamable ethylene polymer composition comprising

   a. at least one antioxidant,
   b. and at least one process aid,
   having a melt strength of at least 2 cN and a density of 940 to 970 kg/m$^3$.

2. The foamable ethylene polymer composition according to claim 1 wherein the $MFR_2$ measured at 190°C is 0.1 to 10 gr/10min.

3. The foamable ethylene polymer composition according to claim 1 or 2 wherein the dissipation factor measured at 1.9 GHz after drying is 50 to 80 ($*10^{-6}$).

4. The foamable ethylene polymer composition according to any preceding claim wherein the crystallinity is 70 to 90%.

5. The foamable ethylene polymer composition according to any preceding claim wherein the crystallisation temperature is 110 to 130°C.

6. The foamable ethylene polymer composition according to any preceding claim wherein the process aid is a stearate.

7. The foamable ethylene polymer composition according to any preceding claim wherein the foamable ethylene polymer composition comprises of at least 80 wt% of a peroxide treated ethylene polymer composition.

8. The foamable ethylene polymer composition according to claim 7 wherein the peroxide treated ethylene polymer composition comprises an ethylene polymer with a density a 940 to 970 kg/m$^3$ and an $MFR_2$ of 3 to 50 gr/10min.

9. The foamable ethylene polymer composition according to claim 8 wherein the peroxide has a half-life temperature T½ at 0.1 h above 133 °C.

10. A foamed cable insulation comprising the foamable ethylene polymer composition according to claim 1 to 9.

11. A data cable comprising the foamed cable insulation according to claim 10.

12. A process for making a foamable polymer composition according to claim 1 to 11 comprising

    a. an unreacted ethylene polymer composition comprising

       i. an ethylene polymer with a density a 940 to 970 kg/m$^3$ and an $MFR_2$ of 3 to 50 gr/10min,
       ii. a peroxide,
       iii. at least one antioxidant, and
       iv. at least one process aid,

b. peroxide treat the unreacted ethylene polymer composition in a compounding extruder,

c. pelletize the foamable ethylene polymer composition,

wherein the $MFR_2$ is decreased with at least 3 gr/10min of the foamable ethylene polymer composition compared with the unreacted ethylene polymer.

13. The process according to claim 12 wherein the ethylene polymer has a density of 950 to 970 kg/m$^3$ and a $MFR_2$ of 5 to 20 gr/10min.

14. The process according to claim 12 or 13 wherein the amount of charged peroxide in the peroxide treatment step is 0.05 to 2 wt%, suitably 0.1 to 1 wt%, and more suitably 0.1 to 0.5 wt%.

15. Use of foamable ethylene polymer composition obtainable from a process according to claim 12 to 14 in a foamed cable insulation, suitable a data cable insulation.

Europäisches
Patentamt

European
Patent Office

Office européen
des brevets

**EUROPEAN SEARCH REPORT**

Application Number

EP 16 17 2204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 98/24836 A1 (MOBIL OIL CORP [US]) 11 June 1998 (1998-06-11) * the whole document * ----- | 1-15 | INV. C08K5/00 C08K5/098 |
| | | | TECHNICAL FIELDS SEARCHED (IPC) |
| | | | C08K |

The present search report has been drawn up for all claims

| Place of search | Date of completion of the search | Examiner |
|---|---|---|
| Munich | 12 October 2016 | Rouault, Yannick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 17 2204

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2016

| Patent document cited in search report | | Publication date | Patent family member(s) | | Publication date |
|---|---|---|---|---|---|
| WO 9824836 | A1 | 11-06-1998 | AU | 733515 B2 | 17-05-2001 |
| | | | AU | 5202798 A | 29-06-1998 |
| | | | CA | 2274070 A1 | 11-06-1998 |
| | | | EP | 0942945 A1 | 22-09-1999 |
| | | | JP | 2001505605 A | 24-04-2001 |
| | | | KR | 20000057431 A | 15-09-2000 |
| | | | TW | 446725 B | 21-07-2001 |
| | | | US | 5916926 A | 29-06-1999 |
| | | | WO | 9824836 A1 | 11-06-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100319957 A

- US 4614764 A

### Non-patent literature cited in the description

- Measurements of the complex permittivity of microwave circuit board substrates using a split dielectric resonator and reentrant cavity techniques. **J KRUPKA ; R G GEYER ; J BAKER-JARVIS ; J CEREMUGA.** Proceedings of the Conference on Dielectric Materials, Measurements and Applications - DMMA'96. IEE, 1996

- Split-Post Dielectric Resonator technique for precise measurements of laminar dielectric specimens - measurement uncertainties. **J KRUPKA ; R N CLARKE ; O C ROCHARD ; A P GREGORY.** Proceedings of the XIII Int. Conference MIKON'2000. Wroclaw, 2000, 305-308
- **M. H. WAGNER.** Rheotens-Mastercurves and Drawability of Polymer Melts. *Polymer Engineering and Sience,* vol. 36, 925-935